# EUROPEAN PATENT APPLICATION

(11) **EP 2 894 769 A1**
(43) Date of publication of application: **15.07.2015**
(21) Application number: 14150792.1
(22) Date of filing: 10.01.2014
(51) Int. Cl.: H02K 3/487

(54) **Stator rapid wedging**

(71) Applicant: Siemens Aktiengesellschaft, 80333 München (DE)
(72) Inventor: Agrawal, Shubha, Jaipur (IN); Kaushal, Vishal, 122015 Gurgaon (IN); Singh1, Harpreet, 122001 Gurgaon (IN); Singla, Aashin, 147001 Patiala (IN)

(57) **Abstract**

A system and method for wedging a stator winding slot (202) is provided. In accordance to the method of the present invention, a second part of wedge (102B) is placed on the stator winding slot (202). Then a first part of wedge (102A) is placed on the second part of wedge (102B). The first part of the wedge (102A) has a plurality of threaded holes (110A, 110B, 110C and 110D). In a last step of the method disclosed in the invention, a plurality of studs (108A, 108B, 108C, 108D) is tightened in the plurality of threaded holes (110A, 110B, 110C and 110D) of the first part of wedge (102A).

## Description

The present invention relates to a method and system for rapid stator wedging and more particularly, to a method and system for rapid stator wedging by using a two-part wedge.

In present days, electrical machines are used in various systems such as power generation plants, electrical vehicles, industrial equipments etc. The electrical machines mainly include electric motors and electric generators. The electric motors and electric generators primarily have a rotor and a stator along with other supporting components. The rotor is a rotating part of the electrical machine. In case of the electric motor, the rotor rotates due to magnetic field of the electric motor is arranged so that a torque is developed about an axis of the rotor. On the other hand, the stator is a stationary part of the electrical machine. In case of the electric motors, the stator acts as field magnets and it creates motion by interacting with the rotor.

In case of the electric generators, the stator acts as power producing component and hence also known as armature. The stator of an electric generator supports a stator core along with windings and also the rotor along with other components. The stator includes a metallic plate known as wrapper that forms a frame that in turn holds the stator core. The stator core is circular in shape and is made of thin alloy sheets known as laminates. The laminates joined side by side to form a circular ring i.e. the stator core. However, there are different methods for forming the stator core are known in the state of the art.

The stator core has longitudinal slots, also known as stator slots, in which the windings are inserted as insulated copper bars. The insulated copper bars are coils fitted into the longitudinal slots of the stator core. In general, two coils are inserted in one longitudinal slot, known as top coil and bottom coil. The winding of the stator core is done by various manual and/or automatic methods. The methods and systems for winding the stator core are well known in the state of the art.

After fitting the coils in the stator core slots, wedges are placed at the top of the each stator slot, known as wedging. The purpose of wedging is to keep the coils intact within the stator slot against steady state forces and transient forces. During the operation of the electrical machines, due to electromagnetic bar bounce forces and vibrations the wedges get loose which in turns moves the stator winding i.e. coils in the stator core slot. The movement of the stator winding in the stator core slot causes wear and tear of the insulation of the stator windings against the stator core iron which leads to a ground fault.

To avoid the ground fault in the stator core it is necessary to keep the stator windings stationary which can be achieved by maintaining the tightness of the stator winding wedges at the time of operation of the electrical machines. In general, the tightness of the stator winding wedges is achieved by inserting the wedges from both sides of the stator core slots and sliding it towards the centre of the stator core. In this process, the windings of the stator slot are compressed against the wedge and then sliding of the wedge is done using mallet. The advantage of installing tight wedges by using mallet is the feasibility of re-wedging of the slots in the field during maintenance. But, the process of installing and maintaining tight wedges by using mallet needs a lot of physical effort and time.

Another process for installing tight wedges known in the art is wedging with ripple springs and pumped hoses. In this wedging process, first the wedges are loosely fitted in the stator slots along with the ripple springs i.e. pre stressed driving strips (PSDS) and hoses. The tightness is achieved by filling the hoses with resign using pumping equipment. The process of wedging with PSDS and pumped hoses is fast and cheap during the manufacturing of a new unit. Prime disadvantage of the process of wedging with PSDS and pumped hoses is that the process cannot be used for re-wedging on site at the time of maintenance due to unavailability of the pumping equipment on site. Another disadvantage of the process is during the manufacturing of the new unit the process of filling the hoses creep the stator slots which leads to looseness of the windings of the stator slots.

In general, all wedging methods and systems known in the state of the art are either time consuming or require massive physical efforts or are not suitable for on-site maintenance.

In the light of the foregoing it is clearly evident that there is a strong need of an efficient method and a system for wedging the stator winding slots, which require less physical efforts and is suitable for on-site maintenance.

It is therefore an objective of the present invention to provide an economical and efficient method and system for rapid wedging of the stator winding slots.

The objective is achieved by providing a method for wedging a stator winding slot according to claim 1, and a stator winding slot according to claim 6. Further embodiments of the present invention are addressed in the dependent claims.

In a first aspect of the present invention, a method for wedging a stator winding slot of an electrical machine is disclosed. In accordance to the method of the present invention, at a first step of the method a second part of wedge is placed on the stator winding slot. Then a first part of wedge is placed on the second part of wedge. The first part of the wedge has a plurality of threaded holes. In a last step of the method disclosed in the invention, a plurality of studs is tightened in the plurality of threaded holes of the first part of wedge.

In accordance with the first aspect of the present invention, the second part of wedge can be ripple spring.

Further, in accordance with the first aspect of the present invention, at least one ripple spring and/or at least one filler are placed on the stator winding slot before placing the first part of wedge.

Furthermore, in accordance with the first aspect of the present invention, one or more parts of wedge are placed on the stator winding slot before placing the first part of wedge.

In a second aspect of the present invention, a stator winding slot is disclosed. The stator winding slot comprises a second part of wedge placed on the stator winding slot. The stator winding slot also includes a first part of wedge placed on the second part of the wedge. The first part of wedge has a plurality of threaded holes. In addition to it, the stator winding slot also has a plurality of studs tightened in the plurality of threaded holes of the first part of wedge.

In accordance with the second aspect of the present invention, at least one ripple spring and/or at least one filler are placed below the first part of wedge on the stator winding slot.

Further, in accordance with the second aspect of the present invention, one or more parts of wedge are placed below the first part of wedge on the stator winding slot.

Accordingly, the present invention provides an effectively and an economically method and system for rapid wedging of the stator winding slots.

The present invention is further described hereinafter with reference to illustrated embodiments shown in the accompanying drawings, in which:
- FIG 1: illustrates wedging components in accordance with an embodiment of the present invention,
- FIG 2: illustrates a perspective view of a stator winding slot in accordance with an exemplary embodiment of the present invention, and
- FIG 3: illustrates a flow chart for a method for wedging a stator winding slot in accordance with an embodiment of the present invention.

Various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

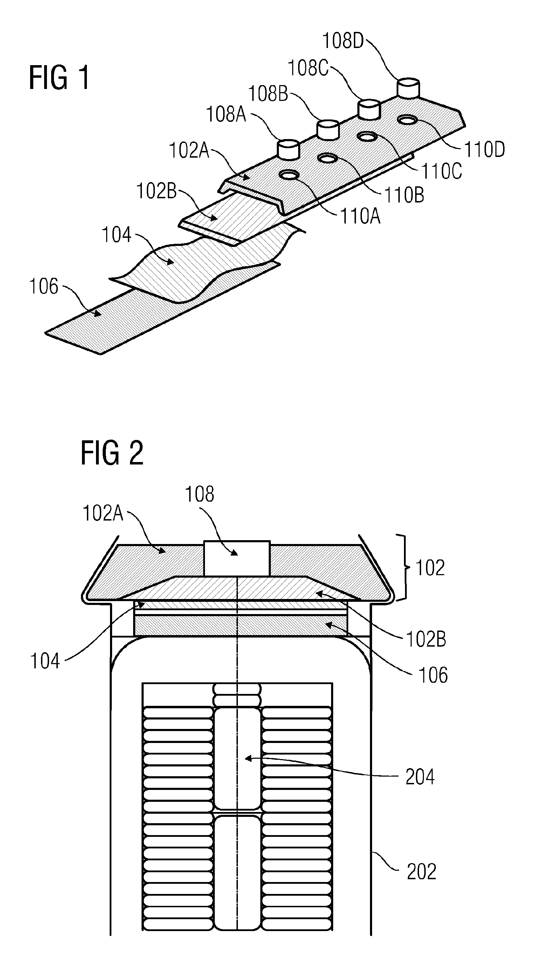

FIG 1 illustrates wedging components in accordance with an embodiment of the present invention.

The wedging components, shown in FIG 1, are used for wedging a stator winding slot of an electrical machine, not shown in FIG 1. The wedging components include a first part of wedge 102A, a second part of wedge 102B, a ripple spring 104 and a filler 106. The wedging components also include a plurality of studs i.e. 108A, 108B, 108C and 108D, as shown in FIG 1.

During wedging of the stator winding slot, the second part of wedge 102B is loosely fit along with the ripple spring 104 and the filler 106 on top of the stator winding slot, not shown in FIG 1. The second part of wedge 102B, the ripple spring 104 and the filler 106 are loosely fit hence does not experience any force. The first part of wedge 102A inserted on top of the loosely fit components i.e. the second part of wedge 102B, the ripple spring 104 and the filler 106. The first part of wedge 102A includes a plurality of threaded holes 110A, 110B, 110C and 110D as shown in FIG 1. The plurality of studs 108A, 108B, 108C and 108D are tightened in the plurality of threaded holes 110A, 110B, 110C and 110D of the first part of wedge 102A. The first part of wedge 102A, the second part of wedge 102B, the ripple spring 104 and the filler 106 along with contents of the stator winding slot are compressed because of a tightening force applied in radial direction by the plurality of studs 108A, 108B, 108C and 108D.

In an embodiment of the present invention, one or more parts of wedge are placed between the second part of the wedge 102B and the stator winding slot.

In an alternate embodiment of the present invention, the first past of wedge 102A is placed on top of the ripple spring 104. In the alternate embodiment of the invention, the plurality of studs 108A, 108B, 108C and 108D are tightened in the plurality of threaded holes 110A, 110B, 110C and 110D of the first part of wedge 102A and applying a tightening force on the ripple spring 104 and the filler 106 along with the contents of the stator winding slot.

In a preferred embodiment of the present invention, the first part of wedge 102A may have more or less than four threaded holes. In the preferred embodiment of the present invention, the number of studs is equal to the number of threaded holes present in the first part of wedge 102A.

FIG 2 illustrates a perspective view of a stator winding slot 202 in accordance with an exemplary embodiment of the present invention.

The stator winding slot 202 shown in FIG 2 includes the first part of wedge 102A, the second part of wedge 102B, the ripple spring 104, the filler 106 and a stud 108 along with a stator winding 204. The first part of wedge 102A, the second part of wedge 102B, the ripple spring 104, the filler 106 and the stud 108 are placed on top of the stator winding slot 202 as explained in FIG 1.

According to the present invention, a combination of the first part of wedge 102A and the second part of wedge 102B tightened with the stud 108 forms a wedge 102 as shown in FIG 2. The filler 106 placed on top of the stator winding slot is primarily used for filling radial space between the wedge 102 and the windings of the stator winding slot. With time the material of the electrical machine starts shrinking and creeping which leads to open spaces between the wedge 102, the filler 106 and the stator winding 204. The ripple spring 104 is primarily used for compensating the pressure loss caused due to material shrinking and creeping. The other advantages of using the ripple spring 104 and the filler 106 on top of the stator winding slot 202 are well known in the state of the art. In a preferred embodiment of the present invention, the ripple spring 104 can be, but not limited to, a pre stressed driving spring (PSDS).

In the present embodiment of the invention, the wedge 102 is formed by using two parts of the wedge i.e. the first part of wedge 102A and the second part of wedge 102B. However, for a person ordinarily skilled in the art, it is evident from the invention that the wedge 102 can be formed by using more than two parts of the wedge.

From FIG 2, it is clearly evident that the tightening force applied by the stud 108 on the wedge 102 is in radial direction instead of pushing by force in axial direction as known in the state of the art.

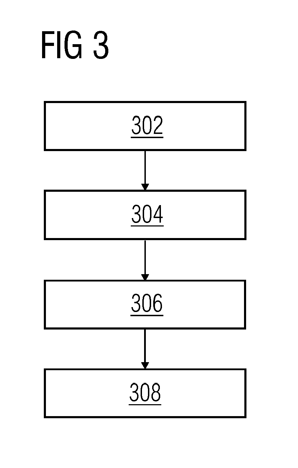

Referring now to FIG 3, a flow chart for a method for wedging a stator winding slot is illustrated in accordance with an embodiment of the present invention.

At step 302, the ripple spring 104 and the filler 106 are placed on top of the stator winding slot 202 as described in FIG 1 and FIG 2. The preferred and alternate methods for placing the ripple spring 104 and the filler 106 are also explained in conjunction with the preceding figures.

At step 304 of the flow chat shown in FIG 3, the second part of wedge 102B is placed loosely on the ripple spring 104 and the filler 106 as explained in FIG 1. The preferred and alternate methods for placing the second part of wedge 102B are also explained in conjunction with the preceding figures.

At step 306 of the flow chat, the first part of wedge 102A is placed on top of the second part of wedge 102B as explained in FIG 1 and FIG 2. The preferred and alternate methods for placing the first part of wedge 102A are also explained in conjunction with the preceding figures.

At the last step of the flow chart shown in FIG 3 i.e. at step 308 the plurality of studs 108A, 108B, 108C and 108D are tightened in the plurality of threaded holes 110A, 110B, 110C and 110D of the first part of wedge 102A as explained in FIG 1. The preferred and alternate methods for tightening the plurality of studs 108A, 108B, 108C and 108D are also explained in conjunction with the preceding figures.

As will be evident from the foregoing description, the present invention provides a method and a system for rapid wedging the stator winding slots.

The method and the system for rapid wedging the stator winding slots disclosed in the present invention required lesser physical efforts as for keeping wedge intact with stator winding slot a tightening force is required in radial direction instead of repetitive hammering the wedge for pushing in the stator winding slot in axial direction as known in the state of the art. Along with this, tightening the studs in radial direction is less time consuming as compare to repetitively hammering the wedge in axial direction, which makes the disclosed method and system for wedging more time efficient.

Also the method and system for wedging disclosed in the invention is suitable for on-site maintenance because no additional system and/or machinery is required for tightening studs of the wedges and/or re-wedging the stator winding slot.

While the present invention has been described in detail with reference to certain embodiments, it should be appreciated that the present invention is not limited to those embodiments. In view of the present disclosure, many modifications and variations would present themselves, to those of skill in the art without departing from the scope of various embodiments of the present invention, as described herein. The scope of the present invention is, therefore, indicated by the following claims rather than by the foregoing description. All changes, modifications, and variations coming within the meaning and range of equivalency of the claims are to be considered within their scope.

## Claims

1. A method for wedging a stator winding slot (202) of an electrical machine, the method comprising:
- placing a second part of wedge (102B) on the stator winding slot (202);
- placing a first part of wedge (102A) on the second part of wedge (102B) wherein the first part of wedge (102A) has a plurality of threaded holes (110A, 110B, 110C, 110D); and
- tightening a plurality of studs (108A, 108B, 108C, 108D) in the plurality of threaded holes (110A, 110B, 110C, 110D) of the first part of wedge (102A).

2. The method according to claim 1, wherein the second part of wedge (102B) is a ripple spring (104).

3. The method according to claim 1 further comprises a step of placing at least one ripple spring (104) on the stator winding slot (202) before placing the first part of wedge (102A).

4. The method according to claim 1 further comprises a step of placing at least one filler (106) on the stator winding slot (202) before placing the first part of wedge (102A).

5. The method according to claim 1 further comprises a step of placing one or more parts of wedge on the stator winding slot (202) before placing the first part of wedge (102A).

6. A stator winding slot (202) comprising:
- a second part of wedge (102B) placed on the stator winding slot (202);
- a first part of wedge (102A) placed on the second part of the wedge (102B) wherein the first part of wedge (102A) has a plurality of threaded holes (110A, 110B, 110C 110D) and;
- a plurality of studs (108A, 108B, 108C, 108D) tightened in the plurality of threaded holes (110A, 110B, 110C 110D) of the first part of wedge (102A).

7. The stator winding slot (202) according to claim 6, wherein the second part of wedge (102B) is a ripple spring (104).

8. The stator winding slot (202) according to claim 6 further comprising at least one ripple spring (104) placed below the first part of wedge (102A).

9. The stator winding slot (202) according to claim 6 further comprising at least one filler (106) placed below the first part of wedge (102A).

10. The stator winding slot (202) according to claim 6 further comprising one or more parts of wedge placed below the first part of wedge (102A).
